# EUROPEAN PATENT SPECIFICATION

(11) **EP 0 687 520 B1**
(45) Date of publication and mention of the grant of the patent: **04.03.1998**
(21) Application number: 95830200.2
(22) Date of filing: 15.05.1995
(51) Int. Cl.: B23Q 1/25

(54) **Sliding table for machine tools, especially for woodworking machines**
Rolltisch für Werkzeugmaschinen, insbesondere für Holzbearbeitungsmaschinen
Table glissante pour machines-outils, en particulier pour machines à bois

(30) Priority: 18.05.1994 IT BO940230
(43) Date of publication of application: 20.12.1995
(73) Proprietor: SCM GROUP S.p.A., 47037 Rimini (IT)
(72) Inventor: Gemmani, Giuseppe, I-47037 Rimini (IT)
(74) Representative: Lanzoni, Luciano

(56) References cited:
- EP-A- 0 554 727
- WO-A-89/04744
- DE-U- 9 003 918
- DE-U- 9 401 284
- GB-A- 879 128
- GB-A- 2 136 062
- US-A- 3 994 326
- US-A- 4 966 209

## Description

The present invention relates to a sliding table for woodworking machinery, in particular for wood-cutting machines.

At present, straight cuts in workpieces of a certain length are made using conventional machines without a particularly high technological content and with the following basic structure: a rigid bed, supporting a horizontal sliding table which can move in both directions and designed to support the workpiece; the sliding table runs in a slideway consisting of a C-shaped guide matching a C-shaped guide under the table itself, with means placed between the two guides to allow the slide to run smoothly. In practice, the sliding table runs on ball units placed between the said C-shaped guides to provide low-friction, rolling motion.

Next to the sliding table, and also supported by the bed, is the fixed tool block, consisting usually of a motor-driven circular saw, mounted with its axis parallel to the table so that it can cut the wooden workpiece fed to it by the sliding table. In practice, the operator secures the workpiece to the sliding table and then pushes the table manually towards the saw blade to give it the motion needed for the workpiece to be cut. Once the cut has been completed, the operator recovers the sliding table, that is to say, pulls it back to the starting position, and then removes the two pieces resulting from the cutting operation and places another workpiece on the sliding table.

DE-U-90 03918, which is used as the basis for the preamble of claim 1, discloses a sliding table of this type. The sliding table of this document further comprises a ratchet mechanism for halting the table in intermediate positions. This ratchet mechanism is only suitable to maintain the sliding table in a fixed position.

A sliding table made in this way, however, presents a number of drawbacks: one drawback is the absence of a servomechanism to assist the motion of the sliding table, as well as the absence of elements to allow the table to stop almost immediately when the operator stops pushing or pulling it back; indeed, if the operator himself does not hold it back, the sliding table continues moving by inertia. The operator is thus under considerable physical strain for several hours a day because he must provide the full force needed to drive and stop the sliding table: even if friction is reduced to a minimum, the physical effort required is considerable because the weight of the sliding table and workpiece is anything but negligible.

Another drawback is constituted by the low degree of reliability in time of the aforementioned rolling-type slide and slideway combinations and the difficulty of effectively applying this kind of combination to the machine; it has been found that guides made directly on the table, and therefore made of aluminium, do not resist the wear caused by the contact with the balls, which are made of steel. To overcome this problem, attempts were made to attach heat-treated and surface-hardened slider strips to the sliding table; the strips were attached to the table by bonding but existing types of synthetic adhesives could not guarantee a lasting bond of the strips to the sliding table.

The aim of the present invention is to overcome the drawbacks mentioned above by providing a sliding table for supporting wooden workpieces to be mounted on woodworking machines and capable of servoassisting the reciprocating motion provided by the operator and thus making the latter's work safer, easier and more accurate.

According to the invention there is provided a woodworking machine as defined in claim 1.

The technical characteristics of the invention, aimed at overcoming the above drawbacks, are laid out in the claims below and the advantages of the disclosure are apparent from the detailed description which follows, with reference to the accompanying drawings, which illustrate a preferred embodiment of the invention by way of example and in which:
- Fig. 1 illustrates a machine for cutting wooden workpieces on which the sliding table disclosed by the present invention can be mounted;
- Fig. 2 is a schematic side view, with some parts cut away, showing a simplified servomechanism to assist sliding table motion in both directions;
- Fig. 3 is a front view of the sliding table disclosed, partially in cross section, showing a guide surface which the table runs on;
- Figs. 4 and 5 are enlarged front views of the table guides in two distinct stages of production.

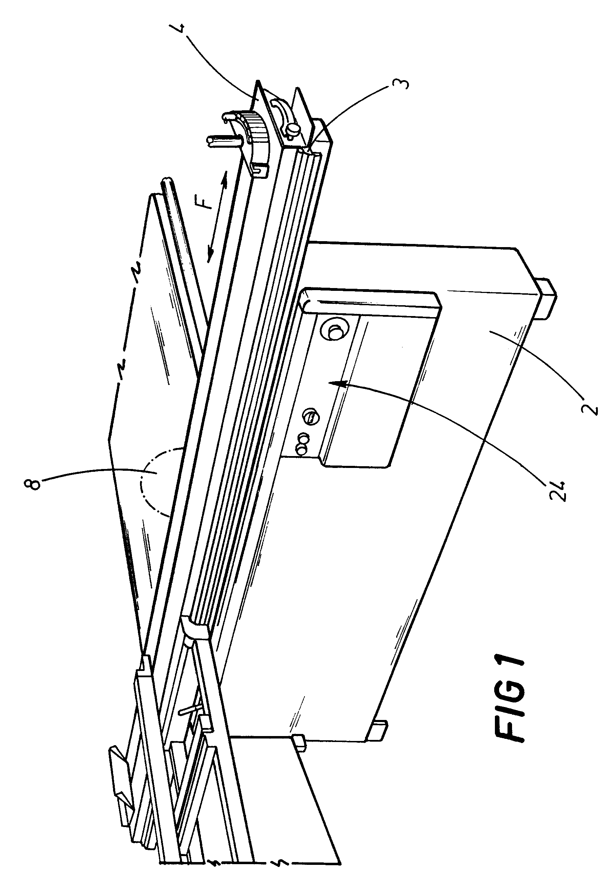

The invention will now be described with reference to the drawings listed above, particularly Fig. 1.

The sliding table disclosed can be mounted on machines used for machining wooden workpieces 1, in particular, machines used for cutting the said workpieces.

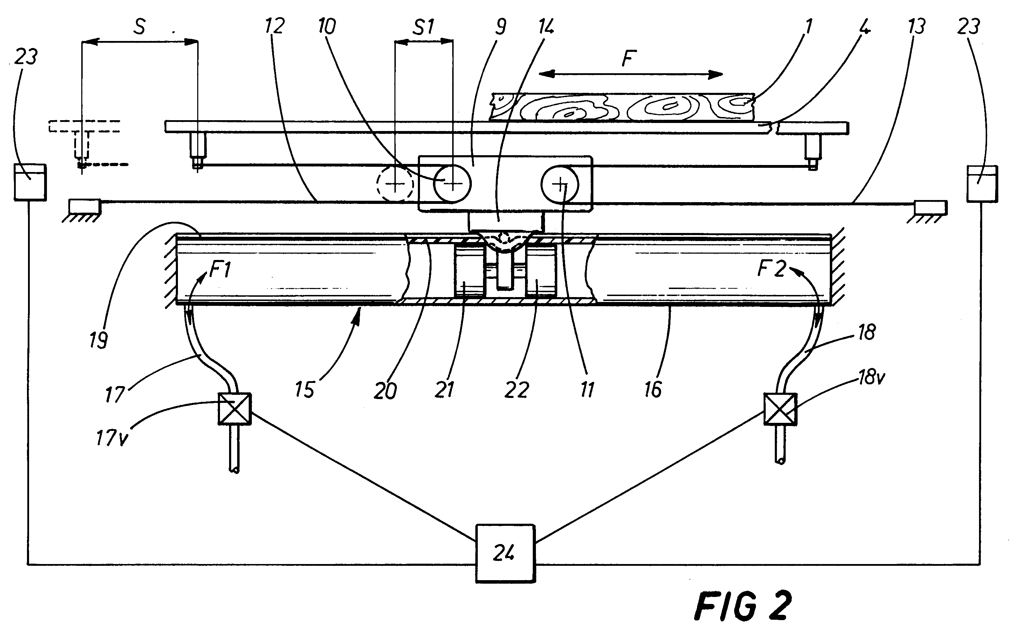

Machines of this kind consist basically of a bed 2, the top of which has a guide surface 3 for the horizontal sliding table 4 that supports the workpieces 1 (both the sliding table 4 and the guide surface 3 are made in a single piece of extruded aluminium). The table 4 can move in both directions (see arrow F in Figs. 1 and 2) on the guide surface 3 by means of opposing guide pairs 5 and 6 (described in more detail below) equipped with recirculating ball units 7 (not illustrated in detail because they are of known type and consist usually of a number of steel balls combined with a dust scraper and a lubricator).

Fig. 1 also shows a tool block 8 fixed on the bed 2 adjacent on one side of the sliding table 4. In the accompanying drawings, the tool block is a circular saw designed to cut the workpiece 1 as the sliding table 4 is moved towards it, usually by pushing it towards the saw 8 starting from a retracted position.

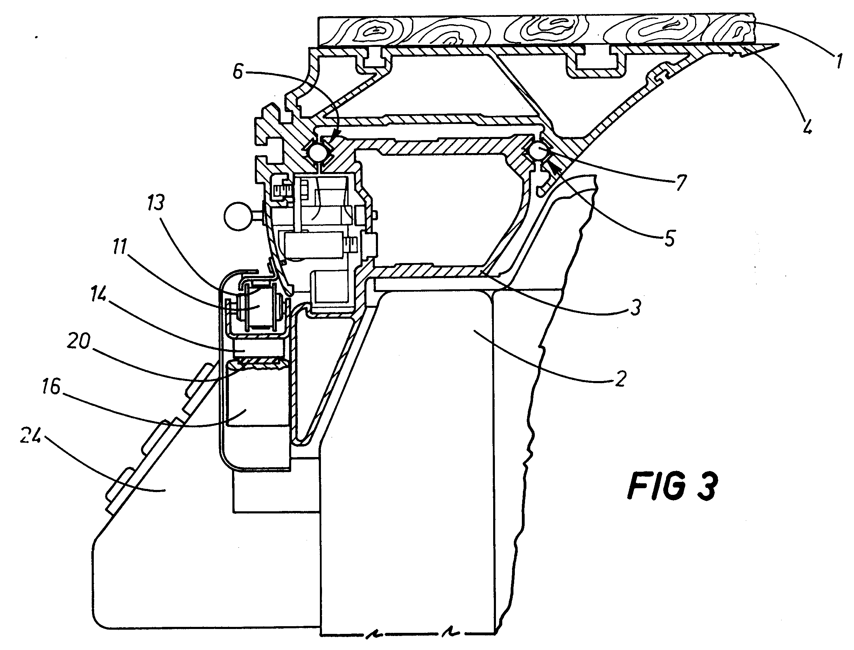

Figs. 2 and 3 illustrate the servomechanism which the sliding table 4 is equipped with. The servomechanism consists of a carriage 9 placed under the table 4 and fitted with at least one pair of pulleys 10 and 11. Over each of the pulleys 10 and 11 there is a belt 12 and 13 one end of each of which is fixed to the bed 2 and the other to one of the ends of the sliding table 4.

The carriage is in turn associated to a movable element 14 of a two-directional, linear actuator 15 attached to the bed 2 which drives the sliding table 4 so that the latter moves by a quantity S that is double the equivalent quantity S1 by which the carriage 9 on the linear actuator 15 moves: in practice, the pulley and belt system makes it possible to double the length of the sliding table movements in relation to the length of the actuator 15.

The actuator 15 consists of stemless cylinder 16 fixed to the bed 2 and parallel to the carriage 9; two pipes 17 and 18 connect two valves 17v and 18v to the ends of the cylinder 16 and, on a command from an external unit, allow air to be filled into, or released from, the cylinder 16 under pressure. The cylinder 16 also has an upper longitudinal groove 19 closed by a seal 20 fixed in a seat made in the cylinder 16. The seal 20 is opened by a deflector, which in practice defines the movable element 14, attached to the carriage 9 and equipped, inside the cylinder 16, with a pair of opposing plates 21 and 22 designed to oppose the flow of pressurized air in such a way as to make carriage 9 move along the cylinder 16.

The movement of the carriage 9, and therefore of the sliding table 4, is also controlled by position sensors 23 located near the ends of the table 4 which allow the position of the table 4 relative to the actuator 15 to be kept under constant control. These sensors 23 are in turn connected to means 24 (a machine control unit of known type which processes data and controls all the movements of the machine) which operate on the actuator 15 by opening or closing the valves 17v and 18v: this changes the air flow into the cylinder (see arrows F1 and F2 in Fig. 2) and consequently changes the direction of travel of the carriage 9 according to the position of the table 4 relative to the cylinder 16, detected by the sensors 23. Obviously, when one of the pipes 17 or 18 is filling air into the cylinder 16, the other is releasing air from the cylinder.

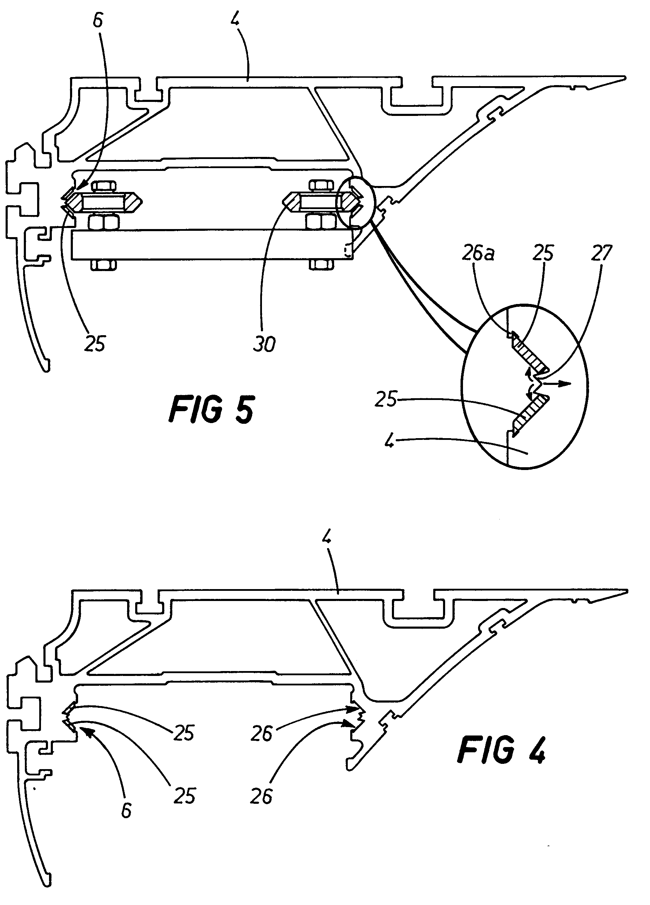

Figs. 3, 4 and 5 show details of the aforementioned guides 5 and 6 forming the slide and slideway combination permitting the sliding table 4 to run along the said guide surface 3 (in Figs. 4 and 5, only the guides 6 on the underside of the table 4 are illustrated since those on the guide surface are the same and their structure identical to the one that will now be described); the guides 5 and 6 consist of pairs of slider strips 25 made of heat-treated steel and fitted in seats 26 made on both the sliding table 4 and on the guide surface 3 (obviously, two by two, opposite one another). In cross section, each pair of seats 26 for the corresponding strips 25 is shaped like a "V" so as to retain a part of the recirculating balls, whilst the outermost portion 26a of each single seat 26, forming the top of each arm of the "V" forms an undercut designed to hold the corresponding slider strip 25.

In the embodiment now described by way of example only, each pair of seats 26 is separated by a two-winged central relief section 27 which, when the slider strip 25 is inserted into the corresponding seat 26, is plastically deformed, the two wings being flattened out so as to obtain a secure fit by applying a force in the direction of the seats 26 to form another two opposing undercuts. In practice, the strips 25 are inserted into the seats 26 and held loosely by the top undercut 26a; next the central relief section is flattened out (with an appropriate tool 30, shown by the hatching in Fig. 5) so that the slider strips 25 are held firmly in the corresponding seats 26 (see also enlarged detail in Fig. 5).

A carriage structured in this way therefore operates as follows starting from a situation in which the table 4 is stationary and as far away as possible from the tool block 8 and retained by a retention device of known kind, not illustrated in the drawings.

The operator places and secures the wooden workpiece 1 on the sliding table 4 and then starts the machine, that is, the saw 8; having done this, the operator can release the table 4 and start the control unit 24 located on the bed 2. Then when the pneumatic system is activated, the cylinder 16 is filled with air in one of the two chambers defined by the movable element 14: for example, with reference to Fig. 2, if the table 4 has to move towards the left, the valve 18v on the pipe 18 is opened to fill the right-hand chamber, whilst the air in the left-hand chamber is discharged through the pipe 17. When the table 4, driven by the carriage 9, reaches the furthest forward position, it is detected by the limit sensor 23 and, as a result, the control unit 24 closes the valve 18v to stop air from entering through the pipe 18. At the same time, the control unit 24 opens the valve 17v so that air is filled into the cylinder through pipe 17 so that the sliding table returns to the starting position.

Obviously, the table 4 can be stopped at any intermediate position when, for example, the workpieces 1 to be machined are small, or when adjustments have to be made while machining is in progress; to stop the table at an intermediate position, the operator acts on the control unit 24 to stop the passage of air at both ends of the cylinder so that the pressure in the latter is balanced, thus stopping the carriage 9 at that position.

To achieve the aforesaid aims, the machine structure described above need not be large since it is not necessary to equip the machine with very long cylinders for the lengths that the sliding table is required to travel and, at the same time, the operator's work is made considerably easier because he can control the movements and positioning of the table without providing the driving force. Moreover, the sliding table disclosed provides the guarantee of a long life and accuracy in time thanks not only to the simple and economical pneumatic drive system but also to the structure of the slide and slideway made of wear-resistant material on the table and guide surface and therefore less subject to deformation due to changes in temperature.

The invention described can be subject to modifications and variations without thereby departing from the scope of the inventive concept. Moreover, all the details of the invention may be substituted by technically equivalent elements.

## Claims

1. Woodworking machine comprising a horizontal table (4) to support wooden workpieces (1) and a bed (2) with a guide surface (3) in order that the sliding table (4) can move in both directions on the guide surface (3), whereby the guide surface (3) is provided with pairs of guides (6) facing to corresponding pairs of guides (5) provided on the sliding table (4) and recirculating ball units (7) are placed between opposed guides (5, 6); and a tool block (8) fixed on the bed (2) adjacent one side of the sliding table (4) and designed to machine the workpieces (1) as the sliding table (4) is moved towards it, the said sliding table (4) being characterized in that it includes a carriage (9) located under it and equipped with at least one pair of pulleys (10, 11) over each of which there is a belt (12, 13) with one end fixed to the bed (2) and the other to the ends of the sliding table (4); the said carriage (9) being associated to a movable element (14) of a two-directional, linear actuator (15) attached to the bed (2) which drives the sliding table (4) so that she latter moves by a quantity (S) that is double the equivalent quantity (S1) by which the carriage (9) on the linear actuator (15) moves.

2. The woodworking machine according to claim 1 characterized in that the said linear actuator (15) consists of rodless cylinder (16) fixed to the bed (2) and being parallel to the carriage (9) and equipped with two pipes (17, 18) connecting two valves (17v, 18v) with the ends of the said cylinder (16) and, on a command from an external unit, allowing air to be filled into or to be released from the cylinder (16); the said cylinder (16) having an upper longitudinal groove (19) closed by a seal (20) opened by a deflector, which is part of the said movable element (14), the part of the movable element inside the actuator (15) is equipped with a pair of opposing plates (21, 22) designed to define surfaces to be driven by the flow of pressurized air.

3. The woodworking machine according to claim 1 characterized in that there are position sensors (23) located near at the ends of the table (4) which allow to keep under constant control the position of the table (4) relative to the actuator (15); the said sensors (23) being connected to a control unit (24) which operates on the actuator (15) and changes the direction of moving of the carriage (9) according to the position of the sliding table (4) detected by the sensors (23).

4. The woodworking machine according to claim 1 characterized in that the said pairs of guides (5, 6) consist of pairs of slider strips (25) placed longitudinally with respect to the moving direction of the said table (4) and stably fitted in seats (26) in pairs with "V" shaped cross section, on both the sliding table (4) and on the guide surface (3); each of the said seats (26) having an open polygonal cross section in order to receive the corresponding slider strip (25) and having sides (26a, 27) forming undercuts, at least one of which is plastically deformed in such a way as to create a secure fit between the said seats (26) and the said slider strips (25) and so that the slider strip (25) is prevented from moving out of position in the transversal direction with respect to the direction of sliding of the table (4).

## Patentansprüche

1. Holzbearbeitungsmaschine, enthaltend einen horizontalen Tisch (4) zum Tragen von Holzwerkstücken (1) und ein Sockel (2) mit einer Führungsfläche (3), so dass sich der Tischschlitten (4) in beiden Richtungen auf der Führungsfläche (3) verschieben kann, wobei die Führungsfläche (3) mit einem Paar von Führungen (6) versehen ist, zugewandt einem entsprechenden Paar von Führungen (5), das an dem Tischschlitten (4) vorgesehen ist, und Kugelumlaufvorrichtungen (7) zwischen den sich gegenüberliegenden Führungen (5, 6) angeordnet sind; und wobei ein Werkzeugblock (8) an die eine Seite des Tischschlittens (4) angrenzend an dem Sockel (2) befestigt und dazu bestimmt ist, das Werkstück zu bearbeiten, sobald sich der Tischschlitten (4) auf diesen zu bewegt, wobei der genannte Tischschlitten (4) **dadurch gekennzeichnet** ist, dass er einen Schlitten (9) enthält, der unter ihm selbst angeordnet und mit wenigstens einem Paar von Riemenscheiben (10,11) versehen ist, über jede derselben ein Riemen (12, 13) läuft, mit einem Ende an dem Sockel (2) befestigt und mit dem anderen Ende an den Enden des Tischschlittens (4); wobei der genannte Schlitten (9) einem beweglichen Element (14) eines an dem Sockel (2) befestigten linearen Zweirichtungsantriebes (15) zugeordnet ist, welcher den Tischschlitten (4) antreibt, so dass letzterer sich um eine Strecke (S) verschiebt, welche die doppelte Länge der gleichwertigen Strecke (S1) beträgt, um welche sich der Schlitten (9) an dein linearen Antrieb (15) verschiebt.

2. Holzbearbeitungsmaschine nach Patentanspruch 1, **dadurch gekennzeichnet**, dass der lineare Antrieb (15) aus einem schaftlosen Zylinder (16) besteht, der an dem Sockel (2) befestigt ist, parallel zu dem Schlitten (9) verläuft und mit zwei Leitungen (17, 18) versehen ist, welche zwei Ventile (17v, 18v) mit den Enden des genannten Zylinders (16) verbinden und es auf einen von einer aussenliegenden Einheit kommenden Befehl hin erlauben, dass in den Zylinder (16) Luft eingelassen oder aus diesem abgelassen wird; wobei der genannte Zylinder (16) eine obere längsverlaufende Rille (19) aufweist, die durch eine Dichtung (20) abgeschlossen ist, welche durch eine Ableitvorrichtung geöffnet wird, die Teil des genannten beweglichen Elementes (14) ist; der Teil des beweglichen Elementes im Inneren des Antriebes (15) ist mit einem Paar von sich gegenüberliegenden Platten (21, 22) versehen, die dazu bestimmt sind, die durch den Druckluftstrom angetriebenen Flächen zu bilden.

3. Holzbearbeitungsmaschine nach Patentanspruch 1, **dadurch gekennzeichnet**, dass Positionsabtaster (23) in der Nähe der Enden des Tischschlittens (4) angeordnet sind, welche es erlauben, die Position des Tischschlittens (4) im Verhältnis zu dem Antrieb (15) ständig unter Kontrolle zu halten; wobei die genannten Abtaster (23) an eine Steuereinheit (24) angeschlossen sind, welche den Antrieb (15) auslöst und die Verschieberichtung des Schlittens (9) wechselt, je nach der Position des Tischschlittens (4), die von den Abtastern (23) erfasst wurde.

4. Holzbearbeitungsmaschine nach Patentanspruch 1, **dadurch gekennzeichnet**, dass die genannten Paare von Führungen (5, 6) aus Paaren von Gleitleisten (25) bestehen, die im Verhältnis zu der Verschieberichtung des genannten Tisches (4) in Längsrichtung angeordnet und stabil in paarweisen Sitzen (26) von "V"-förmigem Querschnitt befestigt sind, und zwar an dem Tischschlitten (4) wie auch an der Führungsfläche (3); wobei jeder der genannten Sitze (26) einen offenen polygonalen Querschnitt aufweist, so dass die entsprechende Gleitleiste (25) aufgenommen werden kann, sowie Seiten (26a, 27), welche Unterschneidungen bilden, und von denen wenigstens eine plastisch auf solche Weise verformt ist, dass eine sichere Befestigung zwischen den genannten Sitzen (26) und den genannten Gleitleisten (25) geschaffen wird, und dass die Gleitleiste (25) daran gehindert wird, sich aus ihrer Position in Querrichtung im Verhältnis zu der Verschieberichtung des Tisches (4) zu bewegen.

## Revendications

1. Machine à bois comprenant une table horizontale (4) destinée à supporter des pièces en bois (1) et un bâti (2) avec une surface guide (3) de manière à ce que la table glissante (4) puisse se déplacer dans les deux directions sur la surface guide (3), dans laquelle la surface guide (3) est dotée de paires de guides (6) faisant face à des paires de guides correspondantes (5) situées sur la table glissante (4) et des unités à recirculation de billes (7) sont placées entre ces guides opposés (5, 6) ; et un groupe d'usinage (8) fixé au bâti (2) attenant à un côté de la table glissante (4) et destiné à usiner les pièces (1) quand cette même table glissante (4) est amenée à son niveau, ladite table glissante (4) étant caractérisée en ce qu'elle comprend un chariot (9) situé en dessous d'elle et doté d'au moins une paire de poulies (10, 11), chacune de ces poulies étant munie, sur le dessus, d'une courroie (12, 13) dont l'une des extrémités est fixée au bâti (2) et l'autre aux extrémités de la table glissante (4) ; ledit chariot (9) étant associé à un élément mobile (14) présenté par un actionneur linéaire bidirectionnel (15), solidaire du bâti (2), qui actionne la table glissante (4) de manière à ce que cette dernière se déplace d'une quantité (S) égale au double de la quantité de déplacement équivalente (S1) du chariot (9) sur l'actionneur linéaire (15).

2. Machine à bois selon la revendication 1, caractérisée en ce que ledit actionneur linéaire (15) consiste en un vérin sans tige (16) fixé au bâti (2), parallèle au chariot (9) et doté de deux conduits (17, 18) qui relient deux valves (17v, 18v) avec les extrémités de ce même vérin (16) et permettent, sur commande d'une unité externe, d'alimenter en air ou de vider le vérin (16) ; ledit vérin (16) présentant une rainure longitudinale supérieure (19) recouverte d'un joint d'étanchéité (20) ouvert par un déflecteur faisant partie de l'élément mobile (14) susmentionné,la partie de ce même élément mobile qui se trouve à l'intérieur de l'actionneur (15) étant munie d'une paire de plateaux opposés (21, 22) destinés à définir les surfaces devant être actionnées par le flux d'air sous pression.

3. Machine à bois selon la revendication 1, caractérisée en ce que des capteurs de position (23) sont placés à proximité des extrémités de la table (4), ce qui permet de contrôler en permanence la position de cette même table (4) par rapport à l'actionneur (15) ; lesdits capteurs (23) étant reliés à une unité de commande (24) qui agit sur l'actionneur (15) et modifie la direction de déplacement du chariot (9) suivant la position de la table glissante (4) relevée par ces mêmes capteurs (23).

4. Machine à bois selon la revendication 1, caractérisée en ce que lesdites paires de guides (5, 6) consistent en des paires de réglettes à coulisse (25), placées longitudinalement par rapport à la direction de déplacement de ladite table (4) et emboîtées de façon stable dans des logements (26) disposés en paires avec une section transversale en forme de "V", tant sur la table glissante (4) que sur la surface guide (3) ; chacun de ces logements (26) en question présentant une section transversale polygonale ouverte de manière à recevoir la réglette correspondante (25) et ayant des parois latérales (26a, 27) formant des contre-dépouilles, dont l'une au moins est plastiquement déformée de manière à créer un emboîtement stable entre lesdits logements (26) et lesdites réglettes (25), et de manière à ce que cette réglette (25) ne sorte pas de sa position en direction transversale par rapport à la direction de glissement de la table (4).
